(19) Europäisches Patentamt
European Patent Office
Office européen des brevets

(11) **EP 3 661 043 A1**

(12) **EUROPEAN PATENT APPLICATION**

(43) Date of publication:
**03.06.2020 Bulletin 2020/23**

(51) Int Cl.:
*H02M 7/493* (2007.01)   *H02M 7/483* (2007.01)

(21) Application number: **19211807.3**

(22) Date of filing: **27.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.11.2018   JP 2018225184**

(71) Applicant: **Hitachi, Ltd.**
**Tokyo 100-8280 (JP)**

(72) Inventors:
• **WATANABE, Kenta**
**Tokyo, 100-8280 (JP)**

• **ITO, Tomomichi**
**Tokyo, 100-8280 (JP)**
• **KIKUCHI, Akira**
**Tokyo, 100-8280 (JP)**
• **KAWAZOE, Hironari**
**Tokyo, 100-8280 (JP)**
• **KIYOFUJI, Yasuhiro**
**Tokyo, 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **MODULAR MULTILEVEL CONVERTER WITH PARALLEL ARMS IN EACH PHASE AND INTER-ARM CURRENT CIRCULATION**

(57)      Main arms 10UP, 10VP, 10WP, 10UN, 10VN, and 10WN and sub-arms 11UP, 11VP, 11WP, 11UN, 11VN, and 11WN are provided for each of the P-side and N-side of each phase, the main arms 10UP, 10VP, 10WP, 10UN, 10VN, and 10WN and the sub-arms 11UP, 11VP, 11WP, 11UN, 11VN, and 11WN are connected in parallel for each of the P-side and N-side of each phase of the U-phase, V-phase, and W-phase, and the power conversion control unit 13 controls an inter-parallel arms circulation current that circulates between the main arms and the sub-arms, that are connected in parallel, in the same phase.

FIG. 1

EP 3 661 043 A1

**Description**

BACKGROUND OF THE INVENTION

1. Field of the Invention

The present invention relates to a power conversion device to which a modular multilevel converter (MMC) is applied and a control method of the power conversion device.

2. Description of Related Art

The modular multilevel converter is a power conversion device that outputs a voltage equal to or higher than a withstand voltage of a switching element of the power conversion device using a self arc-extinguishing semiconductor switching element that can be controlled to be turned on and off, such as an insulated gate bipolar transistor (IGBT).

According to JP-T-2010-512136, in a modular multilevel converter that realizes power conversion between three-phase AC power and DC power, a configuration in which arms configured with a plurality of sub-modules (unit converters) and a reactor that are connected in series are arranged in each phase on a P-side of a DC circuit and an N-side of the DC circuit is disclosed. In the technique disclosed in JP-T-2010-512136, since an AC circuit is three-phase, a modular multilevel converter is configured with a total of six arms. As the unit converter of the modular multilevel converter, a single-phase circuit such as a bidirectional chopper circuit or a single-phase bridge circuit is used.

As a method for increasing capacity of a power conversion device to which the modular multilevel converter disclosed in JP-T-2010-512136 is applied, for example, there is a method for multiplexing power conversion devices, as disclosed in JP-A-2003-189629. In addition, as disclosed in JP-A-2014-230307, there is also a method for increasing capacity of the power conversion device by configuring switching elements in the power conversion device in parallel.

However, in the method for increasing the capacity disclosed in JP-A-2003-189629, since a multiplexing number of devices such as control units for controlling the power conversion device, the linkage transformer, and the switchgear are required, the power conversion device is increased in size and complicated in control.

In the method for increasing the capacity disclosed in JP-A-2014-230307, for example, it is considered necessary to select switching elements having the same characteristics, or to perform voltage control of a gate drive voltage in order to prevent current concentration due to variation in the gate drive voltage of the switching elements and variation in characteristics of the switching elements from occurring in one element.

On the other hand, when the modular multilevel converter is applied to the power conversion device, by connecting arms of each phase in parallel, it is possible to avoid the multiplexing of the power conversion devices and the parallel configuration of the elements thereof to increase the capacity of the power conversion device.

However, in the method for increasing the capacity by connecting the arms of each phase in parallel, a DC capacitor voltage in the unit converter becomes unbalanced due to unbalance of arm current flowing through the parallel arms. When unbalance of the DC capacitor voltage is increased, a high voltage equal to or higher than the withstand voltage of the switching element may be generated and the switching element may be destroyed. In order to protect the switching element from destruction, the power conversion device has to be stopped, which resulted in a decrease in operational efficiency of the power conversion device.

SUMMARY OF THE INVENTION

The present invention has been made in view of the circumstances described above, and an object of the present invention is to provide a power conversion device in which unbalance of a DC capacitor voltage in unit converters of arms of each phase connected in parallel can be reduced and a control method of the power conversion device.

In order to achieve the object described above, a power conversion device according to a first aspect includes a first arm in which unit converters including energy buffers are connected in N stages (N is a positive integer) and a first reactor is connected in series to the unit converters connected in N stages and which is provided in each phase of alternating current,
a second arm in which unit converters including energy buffers are connected in M stages (M is a positive integer) and a second reactor is connected in series to the unit converters connected in M stages and which is connected in parallel to the first arm, and/or
a control unit that controls an inter-parallel arms circulation current circulating between the first arm and the second arm in the same phase.

According to the present invention, unbalance of the DC capacitor voltage in the unit converters of the arms of each phase connected in parallel can be reduced.

BRIEF DESCRIPTION OF THE DRAWINGS

FIG. 1 is a block diagram illustrating a configuration of a power conversion device according to a first embodiment;
FIG. 2 is a diagram illustrating an example of a circuit configuration of a unit converter of FIG. 1;
FIG. 3 is a block diagram illustrating a configuration of a power conversion control unit of FIG. 1;
FIG. 4 is a diagram illustrating a current path of AC current of the power conversion device of FIG. 1;
FIG. 5 is a diagram illustrating a current path of DC current of the power conversion device of FIG. 1;
FIG. 6 is a diagram illustrating a current path of inter-parallel arms circulation current of the power conversion device of FIG. 1;
FIG. 7 is a block diagram illustrating a configuration of an inter-parallel arms balance control unit of FIG. 1;
FIG. 8 is a block diagram illustrating a configuration of a circulation current control unit of FIG. 1;
FIGS. 9A and 9B are diagrams illustrating a relationship between the inter-parallel arms circulation current and voltage balance between the parallel arms of FIG. 1;
FIG. 10 is a timing chart illustrating operation waveforms of respective parts when voltage unbalance between parallel arms of FIG. 1 is eliminated;
FIG. 11 is a block diagram illustrating a configuration of a power conversion device according to a second embodiment;
FIG. 12 is a block diagram illustrating another configuration of a current detector provided in a main arm of FIG. 11;
FIG. 13 is a block diagram illustrating a configuration of a power conversion control unit applied to a power conversion device according to a third embodiment;
FIG. 14 is a block diagram illustrating a configuration of an inter-parallel arms balance control unit of FIG. 13;
FIG. 15 is a diagram illustrating an example of amplitude of AC circulation current determined by an AC circulation current amplitude determination unit of FIG. 14; and
FIG. 16 is a diagram illustrating another example of the amplitude of the AC circulation current determined by the AC circulation current amplitude determination unit of FIG. 14.

DESCRIPTION OF EMBODIMENTS

Embodiments will be described with reference to the drawings. The embodiments described below do not limit the invention according to the scope of claims, and all the elements and combinations thereof described in the embodiments are not necessarily essential for solving means of the invention. In the following description, as an example of a power conversion device to which a modular multilevel converter (MMC) is applied, an AC/DC converter that realizes power conversion between three-phase alternating current of U-phase, V-phase, and W-phase and direct current is taken.

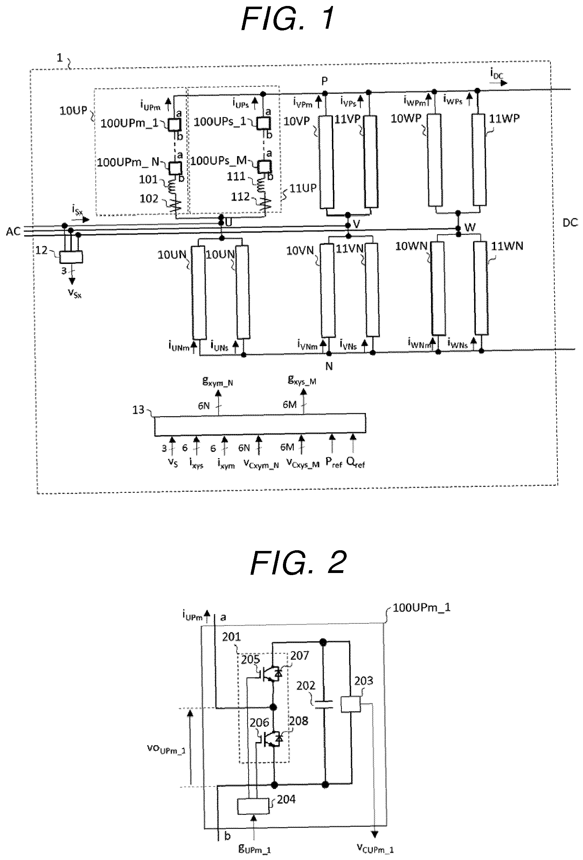

FIG. 1 is a block diagram illustrating a configuration of a power conversion device according to a first embodiment.

In FIG. 1, a power conversion device 1 includes main arms 10UP, 10VP, 10WP, 10UN, 10VN, and 10WN as first arms and sub-arms 11UP, 11VP, 11WP, 11UN, 11VN, and 11WN as second arms, for each of the P-side (also referred to as the upper side) and N-side (also referred to as the lower side) of each phase of the U-phase, V-phase, and W-phase. The power conversion device 1 includes an AC voltage detector 12 and a power conversion control unit 13.

The main arms 10UP, 10VP, 10WP, 10UN, 10VN, and 10WN and the sub-arms 11UP, 11VP, 11WP, 11UN, 11VN, and 11WN are connected in parallel for each of the P-side and N-side of each phase of the U-phase, V-phase, and W-phase.

In FIG. 1, although an example in which one sub-arm 11UP, 11VP, 11WP, 11UN, 11VN, and 11WN is provided for each of the P-side and N-side of each phase is illustrated, a plurality of sub-arms may be provided for each of the P-side and N-side of each phase. Here, capacity of the power conversion device can be increased by increasing the number of sub-arms connected in parallel to each main arm.

Each of the main arms 10UP, 10VP, and 10WP and each of the sub-arms 11UP, 11VP, and 11WP are arranged on the P-side of each phase. Each of the main arms 10UN, 10VN, and 10WN and each of the sub-arms 11UN, 11VN, and 11WN are arranged on the N-side of each phase.

One end of each of the main arms 10UP, 10VP, and 10WP and one end of each of the sub-arms 11UP, 11VP, and 11WP are respectively connected to a DC terminal P. The other end of each of the main arm 10UP and the sub-arm 11UP is connected to an AC terminal U, the other end of each of the main arm 10VP and the sub-arm 11VP is connected to an AC terminal V, and the other end of each of the main arm 10WP and the sub-arm 11WP is connected to an AC terminal W.

One end of each of the main arms 10UN, 10VN, and 10WN and one end of each of the sub-arms 11UN, 11VN, and 11WN are respectively connected to a DC terminal N. The other end of each of the main arm 10UN and the sub-arm 11UN is connected to the AC terminal U, the other end of each of the main arm 10VN and the sub-arm 11VN is connected to the AC terminal V, and the other end of each of the main arm 10WN and the sub-arm 11WN is connected to the AC terminal W. The DC terminals P and N are linked to the DC circuit and the AC terminals U, V, and W are linked to a three-phase AC circuit.

The main arm 10UP includes N (N is a positive integer) unit converters 100UPm_j (j = 1 to N), a reactor 101, and a current detector 102. The unit converter 100UPm_j (j = 1 to N), the reactor 101, and the current detector 102 are connected in series. Each unit converter 100UPm_j includes a DC capacitor which is an energy buffer. Each unit converter 100UPm_j may use a bidirectional chopper cell or a full bridge cell. The reactor 101 suppresses a switching ripple current that circulates through the main arm 10UP. The current detector 102 detects an arm current iUPm flowing through the main arm 10UP.

The sub-arm 11UP includes M (M is a positive integer) unit converters 100UPs_j (j = 1 to M), a reactor 111, and a current detector 112. The unit converter 100UPs_j (j = 1 to N), the reactor 111, and the current detector 112 are connected in series. Each unit converter 100UPs_j includes a DC capacitor which is an energy buffer. Each unit converter 100UPs_j may use a bidirectional chopper cell or a full bridge cell. The reactor 111 suppresses a switching ripple current that circulates through the sub-arm 11UP. The current detector 112 detects the arm current iUPs flowing through the sub-arm 11UP.

The number of unit converters 100UPm_j of the main arm 10UP and the number of unit converters 100UPs_j of the sub-arm 11UP are not necessarily the same number (that is, N = M), and may be different.

Since each of the main arms 10VP, 10WP, 10UN, 10VN, and 10WN has the same configuration as the main arm 10UP, the description thereof is omitted. Each of the the sub-arms 11VP, 11WP, 11UN, 11VN, and 11WN has the same configuration as that of the sub-arm 11UP, and thus description thereof is omitted.

The AC voltage detector 12 detects an AC voltage vSx of the AC current. The "x" of the AC voltage vSx represents one of the three phases of the U-phase, V-phase, and W-phase.

The power conversion control unit 13 controls inter-parallel arms circulation current that circulates between the first arm and the second arm in the same phase. For example, the power conversion control unit 13 controls the inter-parallel arms circulation current that circulates in a parallel arm in which the main arm 10UP and the sub-arm 11UP are connected in parallel. Similarly, the power conversion control unit 13 controls the inter-parallel arms circulation current that circulates in a parallel arm in which the main arm 10VP and the sub-arm 11VP are connected in parallel, and controls the inter-parallel arms circulation current that circulates in the parallel arm in which the main arm 10WP and the sub-arm 11WP are connected in parallel. Similarly, on the P-side, the power conversion control unit 13 controls the inter-parallel arms circulation current that circulates in a parallel arm in which the main arm 10UN and the sub-arm 11UN are connected in parallel, controls the inter-parallel arms circulation current that circulates in a parallel arm in which the main arm 10VN and the sub-arm 11VN are connected in parallel, and controls the inter-parallel arms circulation current that circulates in a parallel arm in which the main arm 10WN and the sub-arm 11WN are connected in parallel.

In the following description, the parallel arm refers to a main arm and a sub-arm connected in parallel to each other. When it is simply referred to as an arm, it refers to the main arm and sub arm for each of the P-side and N-side of each phase of the U-phase, V-phase, and W-phase.

In this case, the power conversion control unit 13 receives AC voltage vSx detected by the AC voltage detector 12, arm current ixym detected by the current detector 102 of each of the main arms 10UP, 10VP, 10WP, 10UN, 10VN, and 10WN, arm current ixys detected by the current detector 112 of each of the sub-arms 11UP, 11VP, 11WP, 11UN, 11VN, and 11WN, DC capacitor voltage vCxym_j (j = 1 to N) detected by the DC voltage detector in the unit converter of each of the main arms 10UP, 10VP, 10WP, 10UN, 10VN, and 10WN, DC capacitor voltage vCxys_j (j = 1 to M) detected by the DC voltage detector in the unit converter of each of the sub-arms 11UP, 11VP, 11WP, 11UN, 11VN, and 11WN, an active power command Pref, and a reactive power command Qref as inputs and outputs a gate pulse gxym_j (j = 1 to N) to be given to the unit converter of each of main arms 10UP, 10VP, 10WP, 10UN, 10VN, and 10WN and a gate pulse gxys_j (j = 1 to M) to be given to the unit converters of each of the sub-arms 11UP, 11VP, 11WP, 11UN, 11VN, and 11WN. In this case, the power conversion control unit 13 generates the gate pulses gxym_j and gxys_j that cause the active power P and reactive power Q accommodated by the power conversion device 1 to follow an active power command Pref and a reactive power command Qref, respectively.

The "x" of each of the arm currents ixym and xys, the DC capacitor voltages vCxym_j and vCxys_j, and the gate pulses gxym_j and gxys_j represents one of three phases of the U-phase, V-phase, and W-phase. Further, the "y" of each of the arm currents ixym and ixys, the DC capacitor voltages vCxym_j and vCxys_j, and the gate pulses gxym_j and gxys_j represents the P-side arm or the N-side arm. Each "m" of the arm current ixym, the DC capacitor voltage vCxym_j, and the gate pulse gxym_j represents the main arm, and the "s" of each of the arm current ixys, the DC capacitor voltage vCxys_j, and the gate pulse gxys_j represents the sub-arm.

Here, the power conversion control unit 13 can reduce unbalance of the DC capacitor voltage in the unit converter of the parallel arm of each phase by controlling the inter-parallel arms circulation current that circulates between the first arm and the second arm in the same phase and can realize a large capacity of the power conversion device 1 while enabling the power conversion device 1 to be stably operated. For that reason, by applying the modular multilevel converter of Fig. 1 to a system linkage power conversion device, renewable energy such as wind power generation, solar power generation, and solar thermal power generation can be linked using high-voltage DC transmission suitable for large-capacity and long-distance transmission.

By increasing the number of second arms connected in parallel to the first arm, it is possible to cope with an increase in capacity of a pumped storage power generation system for maintaining a system frequency, and it is possible to cope with expansion of renewable energy. In this case, by controlling the inter-parallel arms circulation current that circulates between the first arm and the second arm in the same phase, it is possible to prevent increase of unbalance of the DC capacitor voltage in the unit converter of the parallel arm of each phase due to variation in current shunting to the parallel arm, and it is possible to prevent continuous operation of the pumped storage power generation system from being hindered.

The power conversion device 1 can achieve large capacity by increasing the number of second arms connected in parallel to the first arm, and does not need to increase the number of circuit breakers and transformers as the capacity increases. For that reason, the power conversion device 1 is useful for a pumped storage power generation system with limited installation position for installing electrical equipment underground.

The modular multilevel converter of FIG. 1 may be applied to a motor drive device for an induction motor, in addition to the system linkage power conversion device.

FIG. 2 is a diagram illustrating an example of a circuit configuration of a unit converter of FIG. 1. In FIG. 2, an example of a circuit configuration of the unit converter 100UPm_1 of the main arm 10UP of FIG. 1 is illustrated, but other unit converters can be similarly configured.

In FIG. 2, the unit converter 100UPm_1 includes a switching circuit 201, a DC capacitor 202 as an energy buffer, a DC voltage detector 203, and a gate drive circuit 204. The DC capacitor 202 is connected in parallel to the switching circuit 201.

The switching circuit 201 includes switching elements 205 and 206 and freewheeling diodes 207 and 208. The freewheeling diode 207 is connected in parallel to the switching element 205 and the freewheeling diode 208 is connected in parallel to the switching element 206. The switching elements 205 and 206 are connected in series. Output terminals a and b of the unit converter 100UPm_1 are provided at both ends of the switching element 206. Between the output terminals a and b, an output voltage voUPm_1 of the unit converter 100UPm_1 is output. Each of the switching elements 205 and 206 may be an IGBT or a self arc-extinguishing semiconductor switching element other than the IGBT.

The DC voltage detector 203 detects a DC capacitor voltage vCUPm_1 of the DC capacitor 202 and transmits the detected value thereof to the power conversion control unit 13 of FIG. 1.

The gate drive circuit 204 receives a gate pulse gUPm_1 transmitted from the power conversion control unit 13 to the unit converter 100UPm_1. In response to the gate pulse gUPm_1, the gate drive circuit 204 generates a gate drive voltage for switching on and off of the switching elements 205 and 206 and applies the gate drive voltage to the switching elements 205 and 206. In this case, either the DC capacitor voltage vCUPm_1 or zero is output as the output voltage voUPm_1 of the unit converter 100UPm_1. That is, when the switching element 205 is turned on and the switching element 206 is turned off, the DC capacitor voltage vCUPm_1 is output as the output voltage voUPm_1, and when the switching element 205 is turned off and the switching element 206 is turned on, zero is output as the output voltage voUPm_1.

In the example of FIG. 2, although a case where a bidirectional chopper circuit is used as the unit converter 100UPm_1 is illustrated, the unit converter 100UPm_1 is not limited to the bidirectional chopper circuit, and other single-phase circuits such as a single-phase bridge circuit may be used as the unit converter 100UPm_1.

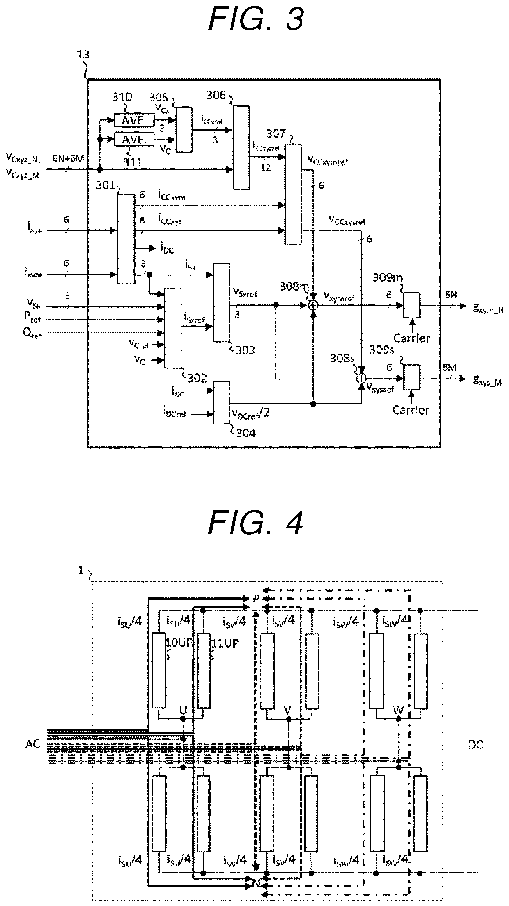

FIG. 3 is a block diagram illustrating a configuration of the power conversion control unit of FIG. 1.

In FIG. 3, the power conversion control unit 13 includes an arm current separation unit 301, a power control unit 302, an AC current control unit 303, a DC current control unit 304, an inter-phases balance control unit 305, an inter-parallel arms balance control unit 306, a circulation current control unit 307, adders 308m and 308p, gate pulse generation units 309m and 309s, and average value computation units 310 and 311 are provided.

The arm current separation unit 301 separates an Ac current iSx, a DC current iDC, and inter-parallel arms circulation currents iCCxym and iCCxys included in the arm currents ixym and ixys. By separating the arm currents ixym and ixys, each current component included in the arm currents ixym and ixys can be controlled.

The AC current iSx is separated for each of the U-phase, V-phase, and W-phase. The inter-parallel arms circulation currents iCCxym and iCCxys are separated for each of the P-side and N-side of each phase of the U-phase, V-phase, and W-phase, and for each of the main arm and sub-arm.

FIG. 4 is a diagram illustrating a current path of an AC current of the power conversion device of FIG. 1.

In FIG. 4, the AC current iSx of each phase of the U-phase, V-phase, and W-phase is a current component that flows through an AC circuit of the power conversion device 1. One quarter of the AC current iSx is shunted to each of the P-side main arm, the P-side sub-arm, the N-side main arm, and the N-side sub-arm. In the three-phase three-wire AC circuit, the sum of the AC currents of each phase of the U-phase, V-phase, and W-phase is zero, and thus the AC current iSx does not flow through the DC circuit. By controlling the AC current iSx, the active power P and the reactive power Q between the three-phase AC circuit and the power conversion device 1 can be controlled. The "x" of the AC current iSx represents one of the three phases of the U-phase, V-phase, and W-phase.

The arm current separation unit 301 of FIG. 3 can compute the AC current iSx by using the following expressions (1) to (3) based on the arm current ixym detected by the current detector 102 of each of the main arms 10UP, 10VP, 10WP, 10UN, 10VN, and 10WN of FIG. 1 and the arm current ixys detected by the current detector 112 of each of the sub-arms 11UP, 11VP, 11WP, 11UN, 11VN, and 11WN of FIG. 1. The arm current separation unit 301 inputs the AC current iSx to the power control unit 302 and the AC current control unit 303.

$$iSU = (iUPm + iUPs) - (iUNm + iUNs) \ldots(1)$$

$$iSV = (iVPm + iVPs) - (iVNm + iVNs) \ldots(2)$$

$$iSW = (iWPm + iWPs) - (iWNm + iWNs) \ldots(3)$$

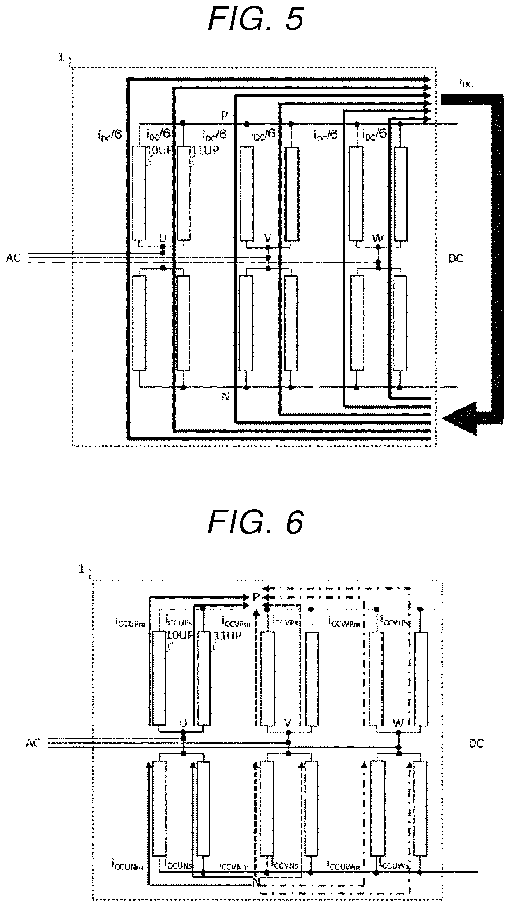

FIG. 5 is a diagram illustrating a current path of a DC current of the power conversion device of FIG. 1.

In FIG. 5, the DC current iDC is a current component that flows through the DC circuit of the power conversion device 1. One-sixth of the DC current iDC is shunted to the main arms and the sub-arms of each phase of the U-phase, V-phase, and W-phase. In this case, DC power PDC can be controlled by controlling the direction and magnitude of the DC current iDC.

The arm current separation unit 301 of FIG. 3 can compute the DC current iDC by using the following expression (4) based on the arm current ixym detected by the current detector 102 of each of the main arms 10UP, 10VP, 10WP, 10UN, 10VN, and 10WN of FIG. 1 and the arm current ixys detected by the current detector 112 of each of the sub-arms 11UP, 11VP, 11WP, 11UN, 11VN, and 11WN of FIG. 1. The arm current separation unit 301 inputs the DC current iDC into the DC current control unit 304.

$$iDC = 1/2 \times \{(iUPm + iUPs) + (iUNm + iUNs) + (iVPm + iVPs)$$
$$+ (iVNm + iVNs) + (iWPm + iWPs) + (iWNm + iWNs)\} \ldots(4)$$

FIG. 6 is a diagram illustrating a current path of the inter-parallel arms circulation current of the power conversion device of FIG. 1.

In FIG. 6, the inter-parallel arms circulation currents iCCxym and iCCxys are current components flowing through the arms, but are currents that do not flow out to the three-phase AC circuit or the DC circuit. For that reason, in the parallel arm of each phase, the inter-parallel arms circulation current iCCxym flowing through the main arm and the inter-parallel arms circulation current iCCxys flowing through the sub-arm are equal in magnitude and opposite in direction. The inter-parallel arms circulation currents iCCxym and iCCxys are equal to the difference current between the arm currents ixym and ixys in the parallel arm of each phase.

By separating the inter-parallel arms circulation currents iCCxym and iCCxys included in the arm currents ixym and ixys, and controlling the inter-parallel arms circulation currents iCCxym and iCCxys to control a charging period and discharging period of the DC capacitor of each arm, unbalance of the DC capacitor voltage in the unit converter of the parallel arm of each phase can be reduced.

The arm current separation unit 301 of FIG. 3 can compute the inter-parallel arms circulation currents iCCxym and iCCxys by using the following expressions (5) to (10) based on the arm current ixym detected by the current detector 102 of each of the main arms 10UP, 10VP, 10WP, 10UN, 10VN, and 10WN of FIG. 1 and the arm current ixys detected by the current detector 112 of each of the sub-arms 11UP, 11VP, 11WP, 11UN, 11VN, and 11WN of FIG. 1. The arm current separation unit 301 inputs the inter-parallel arms circulation currents iCCxym and iCCxys to the circulation current control unit 307.

$$iCCUPm = -iCCUPs = 1/2 \times (iUPm - iUPs) \ldots(5)$$

$$iCCUNm = -iCCUNs = 1/2 \times (iUNm - iUNs) \ldots(6)$$

$$iCCVPm = -iCCVPs = 1/2 \times (iVPm - iVPs) \ ...(7)$$

$$iCCVNm = -iCCVNs = 1/2 \times (iVNm - iVNs) \ ...(8)$$

$$iCCWPm = -iCCWPs = 1/2 \times (iWPm - iWPs) \ ...(9)$$

$$iCCWNm = -iCCWNs = 1/2 \times (iWNm - iWNs) \ ...(10)$$

Returning to FIG. 3, the power control unit 302 causes the active power P and the reactive power Q exchanged between the power conversion device 1 and the three-phase AC circuit to follow the active power command value Pref and the reactive power command value Qref, respectively. The power control unit 302 computes an AC current command value iSxref and inputs the AC current command value iSxref as a command value to the AC current control unit 303. The power control unit 302 computes the active power P and reactive power Q based on the AC voltage vSx and the AC current iSx.

When the active power P exchanged between the power conversion device 1 and the three-phase AC circuit is generated, charge and discharge energy fluctuation (voltage fluctuation) corresponding to the active power P is generated in the DC capacitor in each unit converter. For that reason, the power control unit 302 controls the DC capacitor voltage to be kept constant by flowing the DC current iDC for causing an average voltage value vC of the DC capacitor voltages of all the unit converters to follow a DC capacitor voltage command value vCref. That is, when the active power P is exchanged between the power conversion device 1 and the three-phase AC circuit, the DC capacitor voltage can be kept constant by exchanging the DC power PDC with the DC circuit and constructing the power conversion control unit 13 so that the relationship of active power P = DC power PDC is established.

The AC current control unit 303 receives the AC current command value iSxref obtained from the power control unit 302 and corrects the total value of the output voltages of the unit converters so that the AC current iSx follows the AC current command value iSxref. In this case, the AC current control unit 303 generates an AC voltage command value vSxref for correcting the total value of the output voltages of the unit converters, and inputs AC voltage command value vSxref to the adders 308m and 308p.

The DC current control unit 304 causes the DC current iDC to follow a DC current command value iDCref. The DC current command value iDCref is determined so that the DC power PDC is output. The DC current control unit 304 generates a DC voltage command value vDCref/2 and inputs the DC voltage command value vDCref/2 to the adders 308m and 308p. The DC voltage command value vDCref is output between the DC terminal P and the DC terminal N by outputting one-half of the DC voltage command value vDCref to the P-side arm and the N-side arm.

The inter-phases balance control unit 305 causes the phase average voltage value vCx of the DC capacitor voltage for each unit converter of the upper and lower arms of each phase to follow the DC capacitor voltage average value vC of all the unit converters. The phase average voltage value vCx of the DC capacitor voltage for each unit converter of the upper and lower arms of each phase is obtained by computing an average value of the DC capacitor voltage of the unit converter for each phase. The DC capacitor voltage average value vC of all the unit converters can be obtained by computing an average value of the DC capacitor voltages of all the unit converters.

In this case, the average value computation unit 310 computes the phase average voltage value vCx based on the DC capacitor voltages vCxym_j and vCxys_j and inputs the phase average voltage value vCx to the inter-phases balance control unit 305. The average value computation unit 311 calculates the DC capacitor voltage average value vC based on the DC capacitor voltages vCxym_j and vCxys_j, and inputs the DC capacitor voltage average value vC to the DC current control unit 304 and the inter-phases balance control unit 305.

The inter-phases balance control unit 305 generates an intra-phase circulation current command value iCCxref and inputs the intra-phase circulation current command value iCCxref to the inter-parallel arms balance control unit 306. In this case, the inter-phases balance control unit 305 controls the gate pulses gxym_j and gxys_j so that the period for charging the DC capacitor becomes longer for the phase in which the phase average voltage value vCx is low and controls the gate pulses gxym_j and gxys_j so that the period for discharging the DC capacitor becomes longer for the phase in which the phase average voltage value vCx is high. With this control, the inter-phases balance control unit 305 can eliminate voltage unbalance that occurs between the phases.

The inter-parallel arms balance control unit 306 generates circulation current command values iCCxymref and iCCxysref for controlling the inter-parallel arms circulation currents iCCxym and iCCxys so that unbalance of the DC capacitor voltage of the parallel arm is eliminated and inputs the iCCxymref and iCCxysref to the circulation current control unit 307. The inter-parallel arms balance control unit 306 generates the circulation current command values iCCxymref and iCCxysref for each of the P-side and N-side of each phase of the U-phase, V-phase, and W-phase for each of the main arm and the sub-arm and controls the inter-parallel arms circulation currents iCCxym and iCCxys for each arm.

The circulation current control unit 307 causes the inter-parallel arms circulation currents iCCxym and iCCxys to follow the circulation current command values iCCxymref and iCCxysref. In this case, the circulation current control unit 307 generates circulation voltage command values vCCxymref and vCCxysref. Then, the circulation current control unit 307 inputs the circulation voltage command value vCCxymref to the adder 308m, and inputs the circulation voltage command value vCCxysref to the adder 308p.

The circulation current control unit 307 includes an independent circulation current control system for each arm, and performs control so that the deviation between the circulation current command values iCCxymref and iCCxysref of each arm and the inter-parallel arms circulation currents iCCxym and iCCxys flowing through each arm is eliminated. By controlling the inter-parallel arms circulation currents iCCxym and iCCxys flowing through each arm, voltage unbalance between the average value of the DC capacitor voltage of the main arm and the average value of the DC capacitor voltage of the sub-arm can be eliminated for the main arm and the sub-arm connected in parallel.

Here, the relationship between intra-phase circulation current iCCx and the inter-parallel arms circulation currents iCCxym and iCCxys is given by the following expressions (11) to (13).

$$iCCU = iCCUPm + iCCUPs = iCCUNm + iCCUNs \ldots(11)$$

$$iCCV = iCCVPm + iCCVPs = iCCVNm + iCCVNs \ldots(12)$$

$$iCCW = iCCWPm + iCCWPs = iCCWNm + iCCWNs \ldots(13)$$

The adder 308m generates an arm voltage command value Vxymref by adding the AC voltage command value vSxref, the circulation voltage command value vCCxymref, and one-half of the DC voltage command value vDCref for each main arm and inputs the arm voltage command value Vxymref to the gate pulse generation unit 309m. The adder 308s generates an arm voltage command value Vxysref by adding the AC voltage command value vSxref, the circulation voltage command value vCCxysref, and one-half of the DC voltage command value vDCref for each sub-arm and inputs the arm voltage command value Vxysref to the gate pulse generation unit 309s.

The pulse generation unit 309m generates a gate pulse gxym_j for each of N unit converters of each main arm by comparing the arm voltage command value Vxymref with a carrier wave Carrier, and inputs the gate pulse gxym_j to the gate drive circuit 204 of FIG. 2 provided for each of the N unit converters of each main arm. The gate pulse generation unit 309s generates a gate pulse gxys_j for each of M unit converters of each sub-arm by comparing the arm voltage command value Vxysref with the carrier wave Carrier, and inputs the gate pulse gxys_j to the gate drive circuit 204 provided for each of the M unit converters of each sub-arm.

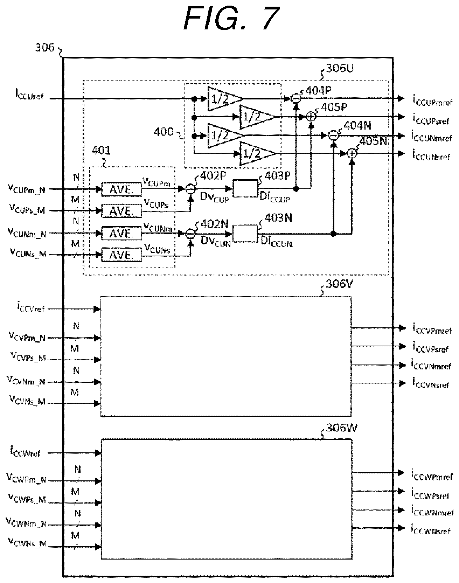

FIG. 7 is a block diagram illustrating a configuration of the inter-parallel arms balance control unit of FIG. 1.

In FIG. 7, the inter-parallel arms balance control unit 306 includes intra-phase, inter-parallel arms balance control units 306U, 306V, and 306W for each phase of the U-phase, V-phase, and W-phase. The intra-phase, inter-parallel arms balance control units 306U, 306V, 306W control the inter-parallel arms circulation currents iCCxym and iCCxys so that unbalance of the DC capacitor voltage of the parallel arm is eliminated, for each of the U-phase, V-phase, and W-phase. The intra-phase, inter-parallel arms balance control unit 306U includes gain multiplication unit 400, 403P, and 403N, an average value computation unit 401, subtractors 402P, 402N, 404P, and 404N, and adders 405P and 405N.

The gain multiplication unit 400 multiplies the U-phase circulation current command value iCCUref obtained from the inter-phases balance control unit 305 by a gain of 1/2 so that one-half of the U-phase circulation current command value iCCUref is shunted to each of the main arm and the sub-arm and inputs the multiplication result to the subtractors 404P and 404N and the adders 405P and 405N.

The average value computation unit 401 computes an arm average voltage value vCUPm of the DC capacitor voltage vCUPm_j of the main arm 10UP and inputs the arm average voltage value vCUPm to the subtractor 402P. The average value computation unit 401 computes an arm average voltage value vCUPs of the DC capacitor voltage vCUPs_j of the sub-arm 11UP and inputs the arm average voltage value vCUPs to the subtractor 402P. The average value computation unit 401 computes an arm average voltage value vCUNm of the DC capacitor voltage vCUNm_j of the main arm 10UN and inputs the arm average voltage value vCUNm to the subtractor 402N. The average value computation unit 401 computes an arm average voltage value vCUNs of the DC capacitor voltage vCUNs_j of the sub-arm 11UN and inputs the arm average voltage value vCUNs to the subtractor 402N.

In this case, in order to improve control performance, an AC fluctuation portion of the DC capacitor may be removed by moving average computation over one cycle, half cycle or the like of the three-phase AC circuit.

The subtractor 402P generates a voltage deviation DvCUP by subtracting the arm average voltage value vCUPs from the arm average voltage value vCUPm, and inputs the voltage deviation DvCUP to the gain multiplication unit 403P. The subtractor 402N generates a voltage deviation DvCUN by subtracting the arm average voltage value vCUNs from the arm average voltage value vCUNm, and inputs the voltage deviation DvCUN to the gain multiplication unit 403N.

The gain multiplication unit 403P generates a circulation current correction value DiCCUP by multiplying the voltage deviation DvCUP by the control gain and inputs the circulation current correction value DiCCUP to the subtractor 404P and the adder 405P. The gain multiplication unit 403N generates a circulation current correction value DiCCUN by multiplying the voltage deviation DvCUN by the control gain and inputs the circulation current correction value DiCCUN to the subtractor 404N and the adder 405N.

The subtractor 404P generates a circulation current command value iCCUPmref by subtracting the circulation current correction value DiCCUP from one-half of the U-phase circulation current command value iCCUref and inputs the circulation current command value iCCUPmref to the circulation current control unit 307. The adder 405P generates a circulation current command value iCCUPsref by adding the circulation current correction value DiCCUP to one-half of the U-phase circulation current command value iCCUref and inputs the circulation current command value iCCUPsref to the circulation current control unit 307.

The subtractor 404N generates a circulation current command value iCCUNmref by subtracting the circulation current correction value DiCCUN from one-half of the U-phase circulation current command value iCCUref, and inputs the circulation current command value iCCUNmref to the circulation current control unit 307. The adder 405N generates a circulation current command value iCCUNsref by adding the circulation current correction value DiCCUN to one-half of the U-phase circulation current command value iCCUref, and inputs the circulation current command value iCCUNsref to the circulation current control unit 307.

Since the intra-phase, inter-parallel arms balance control units 306V and 306W have the same configuration as that of the intra-phase, inter-parallel arms balance control unit 306U, the description thereof will be omitted.

With this configuration, the gate pulse can be controlled so that the period for charging the DC capacitor becomes longer for the arm whose average voltage value of the DC capacitor voltage of each arm is low and the gate pulse can be controlled so that the period for discharging the DC capacitor becomes longer for the arm whose average voltage value of the DC capacitor voltage of each arm is high. For that reason, the inter-parallel arms balance control unit 306 can eliminate voltage unbalance between the parallel arms based on the inter-parallel arms circulation currents iCCxym and iCCxys.

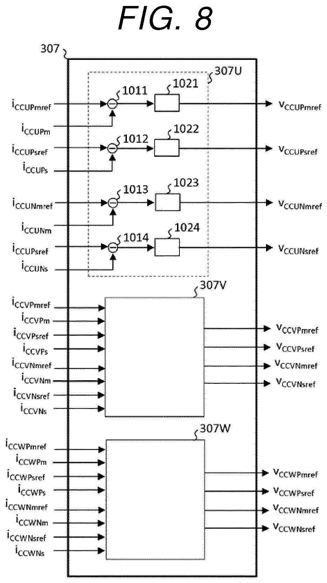

FIG. 8 is a block diagram illustrating a configuration of the circulation current control unit of FIG. 1.

In FIG. 8, the circulation current control unit 307 causes the inter-parallel arms circulation currents iCCxym and iCCxys to follow the circulation current command values iCCxymref and iCCxysref. The circulation current control unit 307 includes intra-phase circulation current control units 307U, 307V, and 307W for each phase of the U-phase, V-phase, and W-phase. The intra-phase circulation current control unit 307U includes subtractors 1011 to 1014 and gain multiplication units 1021 to 1024.

The subtractor 1011 subtracts the inter-parallel arms circulation current iCCUpm from the circulation current command value iCCUPmref and inputs the subtraction result to the gain multiplication unit 1021. The gain multiplication unit 1021 generates a circulation voltage command value vCCUPmref by multiplying the deviation between the circulation current command value iCCUPmref and the inter-parallel arms circulation current iCCUPm by a control gain, and inputs the circulation voltage command value vCCUPmref to the adder 308m of FIG. 3.

The subtractor 1012 subtracts the inter-parallel arms circulation current iCCUPs from the circulation current command value iCCUPsref, and inputs the subtraction result to the gain multiplication unit 1022. The gain multiplication unit 1022 generates a circulation voltage command value vCCUPsref by multiplying the deviation between the circulation current command value iCCUPsref and the inter-parallel arms circulation current iCCUPs by a control gain, and inputs the circulation voltage command value vCCUPsref to the adder 308s of FIG 3.

The subtractor 1013 subtracts the inter-parallel arms circulation current iCCUNm from the circulation current command value iCCUNmref and inputs the subtraction result to the gain multiplication unit 1023. The gain multiplication unit 1023 generates a circulation voltage command value vCCUNmref by multiplying the deviation between the circulation current command value iCCUNmref and the inter-parallel arms circulation current iCCUNm by a control gain, and inputs the circulation voltage command value vCCUNmref to the adder 308m.

The subtractor 1014 subtracts the inter-parallel arms circulation current iCCUNs from the circulation current command value iCCUNsref and inputs the subtraction result to the gain multiplication unit 1024. The gain multiplication unit 1024 generates a circulation voltage command value vCCUNsref by multiplying the deviation between the circulation current command value iCCUNsref and the inter-parallel arms circulation current iCCUNs by a control gain, and inputs the circulation voltage command value vCCUNsref to the adder 308s.

In addition, since the intra-phase circulation current control units 307V and 307W have the same configuration as the intra-phase circulation current control unit 307U, the description thereof is omitted.

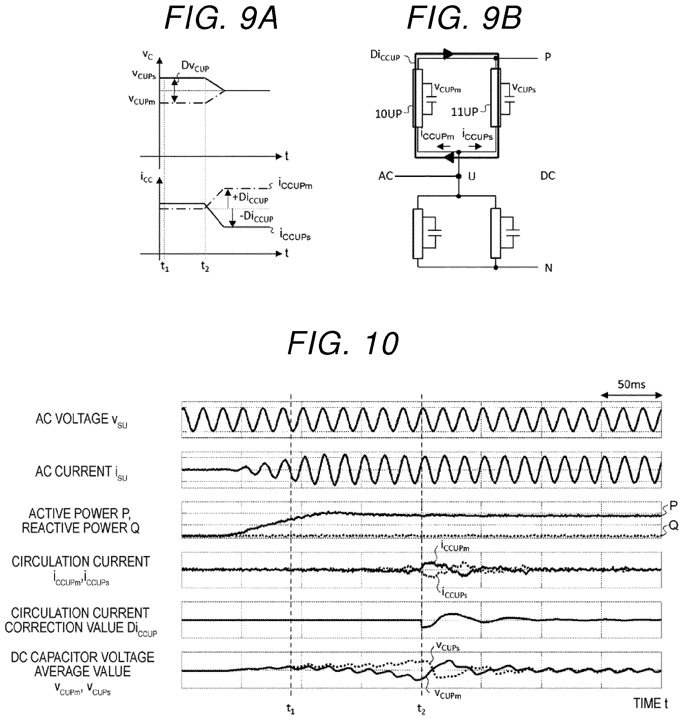

FIGS. 9A and 9B are diagrams illustrating the relationship between the inter-parallel arms circulation current of FIG. 1 and the voltage balance between the parallel arms. In the following description, a relationship between change in the inter-parallel arms circulation current iCCUPm of the main arm 10UP and the inter-parallel arms circulation current iCCUPs of the sub-arm 11UP of FIG. 9B and the deviation DvCUP between the arm average voltage value vCUPm of the DC capacitor voltage vCUPm_j of the main arm 10UP and the arm average voltage value vCUPs of the DC capacitor voltage vCUPs_j of the sub-arm 11UP is taken as an example.

In FIG. 9A, it is assumed that the inter-parallel arms balance control unit 306 of FIG. 1 is stopped at time t1 and starts operating at time t2. Here, when the inter-parallel arms circulation current iCCUPm flowing through the main arm 10UP and the inter-parallel arms circulation current iCCUPs flowing through the sub-arm 11UP coincide with each other, capacitor voltage balance between the main arm 10UP and the sub-arm 11UP is maintained.

On the other hand, when unbalance between the inter-parallel arms circulation current iCCUPm and iCCUPs is increased due to some disturbance at time t1 of FIG. 9A, the arm average voltage value vCUPs of the DC capacitor voltage vCUPs_j of the sub-arm 11UP becomes higher than the arm average voltage value vCUPm of the DC capacitor voltage vCUPm_j of the main arm 10UP, and voltage unbalance occurs . When this voltage unbalance occurs, the deviation DvCUP occurs between the arm average voltage value vCUPm of the DC capacitor voltage vCUPm_j of the main arm 10UP and the arm average voltage value vCUPs of the DC capacitor voltage vCUPs_j of the sub-arm 11UP and when the deviation DvCUP is increased, a high voltage exceeding the withstand voltage of the switching elements 205 and 206 of FIG. 2 may be generated. When increase of the deviation DvCUP is left unattended, the switching elements 205 and 206 may be destroyed, and thus the power conversion device 1 of FIG. 1 has to be stopped.

Next, it is assumed that the inter-parallel arms balance control unit 306 starts operating at time t2. In this case, the inter-parallel arms balance control unit 306 generates a circulation current correction value DiCCUP in order to eliminate the deviation DvCUP between the arm average voltage value vCUPm of the DC capacitor voltage vCUPm_j of the main arm 10UP and the arm average voltage value vCUPs of the DC capacitor voltage vCUPs_j of the sub-arm 11UP. The inter-parallel arms balance control unit 306 performs control to increase the circulation current iCCUPm flowing through the main arm 10UP by the circulation current correction value DiCCUP and to decrease the circulation current iCCUPs flowing through the sub-arm 11UP by the circulation current correction value DiCCUP. That is, the circulation current flowing between the parallel arms increases by the circulation current correction value DiCCUP.

In this case, the circulation current iCCUPm flowing through the main arm 10UP increases by the circulation current correction value DiCCUP, and thus the DC capacitor of the main arm 10UP is charged and the arm average voltage value vCUPm of the DC capacitor voltage vCUPm_j of the main arm 10UP increases. On the other hand, the circulation current iCCUPs flowing through the sub-arm 11UP decreases by the circulation current correction value DiCCUP, and thus the DC capacitor of the sub-arm 11UP is discharged, and the arm average voltage value vCUPs of the DC capacitor voltage vCUPs_j of the sub-arm 11UP decreases. For that reason, the deviation DvCUP between the arm average voltage value vCUPm of the DC capacitor voltage vCUPm_j of the main arm 10UP and the arm average voltage value vCUPs of the DC capacitor voltage vCUPs_j of the sub-arm 11UP decreases, and the capacitor voltage unbalance between the main arm 10UP and the sub-arm 11UP can be eliminated.

In the description of FIGS. 9A and 9B, although it is assumed that the inter-parallel arms balance control unit 306 starts operating at time t2 in order to explain action of eliminating voltage unbalance between the arms by the inter-parallel arm balance control unit 306, the inter-parallel arms balance control unit 306 can be operated at all times. In this case, even when some disturbance occurs at time t1, occurrence of the deviation DvCUP can be prevented in advance and the switching elements 205 and 206 can be protected.

Hereinafter, an operation waveform of each part when the inter-parallel arms balance control unit 306 of FIG. 1 is applied will be described.

FIG. 10 is a timing chart illustrating operation waveforms of respective parts when voltage unbalance between the parallel arms of FIG. 1 is eliminated. In FIG. 10, a case where voltage unbalance of the DC capacitor on the P-side arm in the U-phase occurs is illustrated. On the vertical axis of FIG. 10, from the top, the AC voltage vSU, the AC current iSU, the active power P, the reactive power Q, the inter-parallel arms circulation currents iCCUPm and iCCUPs on the P-side arm in the U-phase, the circulation current correction value DiCCUP of the inter-parallel arms balance control unit 306, and the arm average voltage values VCUPm and VCUPs of the DC capacitor voltage on the P-side arm in the U-phase are indicated. The horizontal axis indicates time t.

It is assumed that the inter-parallel arms balance control unit 306 is stopped at time t1 of FIG. 10 and starts operating at time t2. At time t1, the inter-parallel arms circulation currents iCCUPm and iCCUPs flowing through the arms are substantially the same value (iCCUPm + iCCUPs = 0). In this case, the arm average voltage values VCUPm and VCUPs of the DC capacitor voltage on the P-side arm in the U-phase are kept substantially constant.

Thereafter, when a disturbance is applied to the P-side arm in the U-phase during the section from time t1 to time t2, current balance of the inter-parallel arms circulation currents iCCUPm and iCCUPs gradually collapses, and accordingly the voltage unbalance between the arm average voltage values VCUPm and VCUPs increases.

Next, it is assumed that the operation of the inter-parallel arms balance control unit 306 is started at time t2. In this case, the inter-parallel arms balance control unit 306 generates a circulation current correction value DiCCUP in a direction in which the voltage unbalance of the DC capacitor voltage on the P-side arm in the U-phase is eliminated. Due to the generation of the circulation current correction value DiCCUP, a difference occurs between the circulation current iCCUPm flowing through the main arm 10UP and the circulation current iCCUPs flowing through the sub-arm 11UP. That is, a circulation current corresponding to the circulation current correction value DiCCUP flows between the parallel arms by the operation of the inter-parallel arms balance control unit 306.

Next, after time t2, by the operation of the inter-parallel arms balance control unit 306, the voltage balance between the arm average voltage values VCUPm and VCUPs is controlled to be kept substantially constant and the voltage unbalance of the DC capacitor between the parallel arms is eliminated by the inter-parallel arms circulation current.

In the embodiment described above, the operation of the parallel circuit of the two arms of the first arm (main arm) and second arm (sub-arm) has been described. However, the present invention is not limited to a parallel circuit of two arms, and can be extended to a parallel circuit of two or more arms as long as a circuit configuration allows a circulation current to flow between the parallel arms.

As described above, according to the embodiment described above, capacity of the power conversion device 1 can be increased, and voltage unbalance of the DC capacitor voltage between the parallel arms can be eliminated by the inter-parallel arms circulation current, and thus the power conversion device 1 can be stably operated.

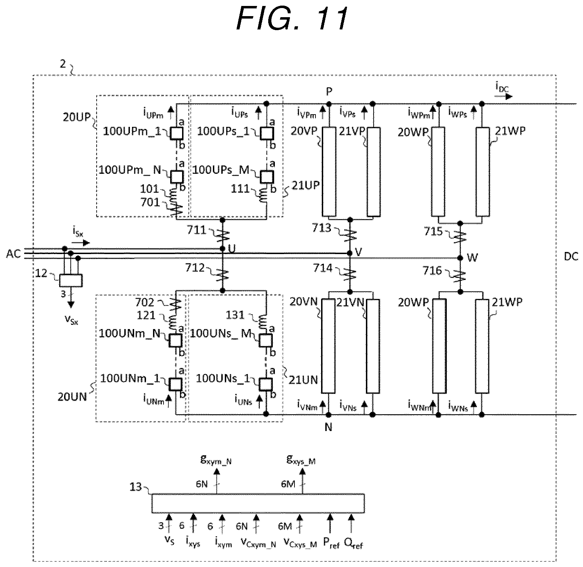

FIG. 11 is a block diagram illustrating a configuration of a power conversion device according to a second embodiment. For the same configuration as the first embodiment, the description thereof is omitted, and the same reference numerals are used.

In FIG. 11, a power conversion device 2 includes main arms 20UP, 20VP, 20WP, 20UN, 20VN, and 20WN as first arms and sub-arms 21UP, 21VP, 21WP, 21UN, 21VN, and 21WN as second arms, for each of the P-side and N-side of each phase of the U-phase, V-phase, and W-phase. The power conversion device 2 includes the AC voltage detector 12, the power conversion control unit 13, and current detectors 711 to 716.

The main arms 20UP, 20VP, 20WP, 20UN, 20VN, and 20WN and sub-arm 21UP, 21VP, 21WP, 21UN, 21VN, and 21WN are connected in parallel for each of the P-side and N-side of each phase of the U-phase, V-phase, and W-phase.

Each of the main arms 20UP, 20VP, and 20WP and each of the sub-arms 21UP, 21VP, and 21WP are arranged on the P-side of each phase. Each of the main arms 20UN, 20VN, and 20WN and each of the sub-arms 21UN, 21VN, and 21WN are arranged on the N-side of each phase.

One end of each of the main arms 20UP, 20VP, and 20WP and one end of each of the sub-arms 21UP, 21VP, and 21WP are respectively connected the DC terminal P. The other end of each of the main arm 20UP and the sub-arm 21UP is connected to the AC terminal U through the current detector 711, the other end of each of the main arm 20VP and the sub-arm 21VP is connected to the AC terminal V through the current detector 713, and the other end of each of the main arm 20WP and the sub-arm 21WP is connected to the AC terminal W through the current detector 715.

One end of each of the main arms 20UN, 20VN, and 20WN and one end of each of the sub-arms 21UN, 21VN, and 21WN are respectively connected to the DC terminal N. The other end of each of the main arm 20UN and the sub-arm 21UN is connected to the AC terminal U through the current detector 712, the other end of each of the main arm 20VN and the sub-arm 21VN is connected to the AC terminal V through the current detector 714, and the other end of each of the main arm 20WN and the sub-arm 21WN is connected to the AC terminal W through the current detector 716.

In FIG. 11, although an example in which the current detectors 711 to 716 are connected to the AC side is illustrated, the current detectors 711 to 716 may be connected to the DC side.

The main arm 20UP includes N unit converters 100UPm_j, the reactor 101, and the current detector 701. The unit converter 100UPm_j, the reactor 101, and the current detector 701 are connected in series. The current detector 701 detects the arm current iUPm flowing through the main arm 20UP. Detection accuracy of the current detector 701 can be made lower than detection accuracy of the current detector 711.

The sub-arm 21UP includes M unit converters 100UPs_j and the reactor 111. The unit converter 100UPs_j and the reactor 111 are connected in series.

The main arm 20UN includes N unit converters 100UNm_j, the reactor 121, and the current detector 702. The unit converter 100UNm_j, the reactor 121, and the current detector 702 are connected in series. The current detector 702 detects the arm current iUNm flowing through the main arm 20UN. Detection accuracy of the current detector 702 can be made lower than detection accuracy of the current detector 712.

The sub-arm 21UN includes M unit converters 100UNs_j and the reactor 131. The unit converter 100UNs_j and the reactor 131 are connected in series.

Since each of the main arms 20VP and 20WP has the same configuration as the main arm 20UP, the description thereof is omitted. Since each of the sub-arms 21VP and 21WP has the same configuration as the sub-arm 21UP, the description thereof is omitted. Since each of the main arms 20VN and 20WN has the same configuration as the main arm 20UN, and the description thereof is omitted. Since each of the sub-arms 21VN and 21WN has the same configuration as the sub-arm 21UN, and the description thereof is omitted.

The current detector 711 detects the sum of the arm currents iUPm and iUPs. The current detector 712 detects the sum of the arm currents iUNm and iUNs. The current detector 713 detects the sum of the arm currents iVPm and iVPs. The current detector 714 detects the sum of the arm currents iVNm and iVNs. The current detector 715 detects the sum of arm currents iWPm and iWPs. The current detector 716 detects the sum of arm currents iWNm and iWNs.

The power conversion control unit 13 separates the AC current iSx, the DC current iDC, and the inter-parallel arms circulation currents iCCxym and iCCxys included in the arm currents ixym and ixys, and controls each current component of the AC current iSx, the DC current iDC, and the inter-parallel arms circulation currents iCCxym and iCCxys based on the AC voltage command value vSxref, the DC voltage command value vDCref, and the circulation voltage command values vCCxymref and vCCxysref.

In this case, by subtracting the detected value of each arm current ixym from the detected value of each of the current detectors 711 to 716, the value of the arm current ixys input to the power conversion control unit 13 can be calculated.

Here, the power conversion control unit 13 performs AC current control based on the AC current iSx. The AC current iSx is given by the sum of the arm currents iWNm and iWNs for each of the P-side and N-side of each phase, as represented in the expressions (1) to (3). The sum of arm currents iWNm and iWNs for each of the P-side and N-side of each phase is equal to the detected value of each current detector 711 to 716.

Here, when the DC voltage component is included in the AC voltage command value vSxref due to offset and temperature drift of each of the current detectors 711 to 716, there is a possibility that an iron core of a linkage transformer linked to the three-phase AC circuit is subjected to DC magnetization. In order to suppress this DC magnetization, a highly accurate current detector is used as each of the current detectors 711 to 716, and the offset and temperature drift of each of the current detectors 711 to 716 are reduced. With this configuration, the DC component of each of the current detectors 711 to 716 can be minimized, and the power conversion control unit 13 can perform AC current control so as to suppress the current DC component flowing to the linkage transformer.

On the other hand, the power conversion control unit 13 performs direct current control based on the DC current iDC, and performs circulation current control based on the inter-parallel arms circulation currents iCCxym and iCCxys. The direct current control and the circulation current control do not contribute to DC magnetization of the linkage transformer. For that reason, in order to perform the direct current control and the circulation current control, a current detector with lower accuracy than the current detectors 711 to 716 may be used, and detection accuracy of the current detectors 701 and 702 can be made lower than detection accuracy of the current detectors 711 to 716. For that reason, it is necessary to use twelve high-accuracy current detectors in the configuration of FIG. 1, whereas, in the configuration of FIG. 11, six high-accuracy current detectors and six low-accuracy current detectors may be used and cost reduction can be achieved with respect to the configuration of FIG. 1.

In FIG. 11, although an example in which a current detector is provided on the main arm side of the main arm and the sub-arm and the current detector on the sub-arm side is omitted is illustrated, a current detector may be provided on the sub-arm side, and the current detector on the main arm side may be omitted.

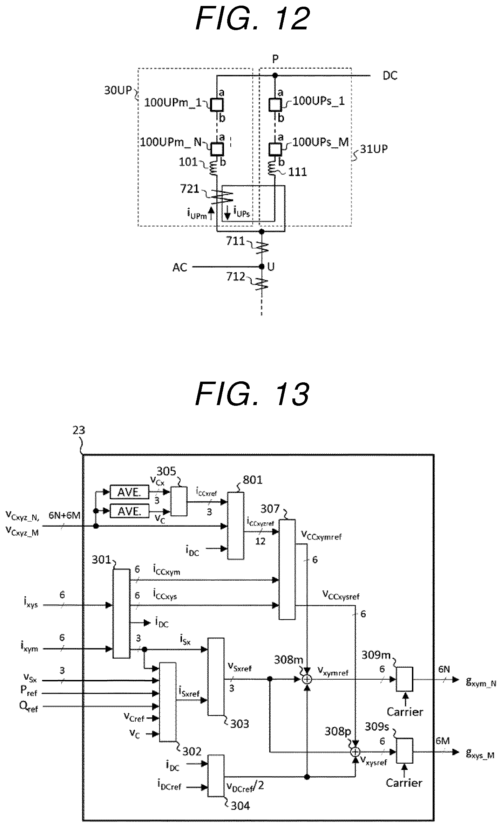

FIG. 12 is a block diagram illustrating another configuration of the current detector provided in the main arm of FIG. 11.

In FIG. 12, as the P-side arm in the U-phase, a main arm 30UP and a sub-arm 31UP may be used instead of the main arm 20UP and the sub-arm 21UP of FIG. 11. The same applies to the N-side arm in the U-phase, the P-side arm in the V-phase, the N-side arm in the V-phase, the P-side arm in the W-phase, and the N-side arm in the W-phase.

The main arm 30UP includes a current detector 721 instead of the current detector 701 of FIG. 11. The current detector 721 detects a difference between the arm currents iUPm and iUPs . The unit converter 100UPm_j, the reactor 101, and the current detector 721 of the main arm 30UP are connected in series. The unit converter 100UPm_j and the reactor 101 of the sub-arm 31UP and the current detector 721 of the main arm 30UP are connected in series. One end of the main arm 30UP is connected to the DC terminal P. The other end of the main arm 30UP is connected to the AC terminal U. One end of the sub-arm 31UP is connected to the DC terminal P. The other end of the sub-arm 31UP is connected to the AC terminal U through the current detector 721. However, the main arm 30UP and the sub-arm 31UP are connected to the AC terminal U so that the arm currents iUPm and iUPs flowing through the current detector 721 are reversed. In order to reverse the arm currents iUPm and iUPs flowing through the current detector 721, a connection path between the sub-arm 31UP and the AC terminal U can be circulated through the current detector 721.

Here, as represented in the expressions (5) to (10), the value obtained by multiplying the difference current between the arm currents iUPm and iUPs by a factor of 1/2 is the inter-parallel arms circulation current iCCUPm or -iCCUPs circulating between the arms. As a result, by multiplying the detection value of the current detector 721 by the factor of 1/2, it is possible to obtain the inter-parallel arms circulation current iCCUPm or -iCCUPs.

For that reason, by using the current detector 721 instead of the current detector 701 of FIG. 11, a subtractor for obtaining the difference current between the arm currents iUPm and iUPs can be eliminated and cost reduction can be achieved.

FIG. 13 is a block diagram illustrating a configuration of a power conversion control unit applied to a power conversion device according to a third embodiment. For the same configuration as the first embodiment and the second embodiment, the description thereof is omitted, and the same reference numerals are used.

In FIG. 13, this power conversion device includes a power conversion control unit 23 instead of the power conversion control unit 13 of FIG. 3. The power conversion control unit 23 includes an inter-parallel arms balance control unit 801 instead of the inter-parallel arms balance control unit 306 of FIG. 3.

The inter-parallel arms balance control unit 801 causes the inter-parallel arms circulation current to include an AC circulation current having an arbitrary frequency. In this case, the inter-parallel arms balance control unit 801 can determine an AC circulation current amplitude value of the AC circulation current based on a current amplitude value of the DC current iDC flowing through the power conversion device.

In the modular multilevel converter, when a sufficient arm current flows through each arm, a sufficient charge and discharge current flows through the DC capacitor of the unit converter, and thus voltage balance of the DC capacitor can be maintained by balance control. On the other hand, in an operating condition where the arm current is extremely small, such as during no-load operation or light load operation, the charge and discharge current of the DC capacitor is reduced, and it becomes difficult to balance the voltage of the DC capacitor by balance control.

For that reason, the inter-parallel arms balance control unit 801 performs control so that the inter-parallel arms circulation current flows during no-load operation or light load operation. With this configuration, even during no-load operation or light load operation, the circulation current continues to flow through the parallel arm, and a sufficient charge and discharge current flows through the DC capacitor, and thus voltage balance of the DC capacitor can be maintained by balance control.

Here, during no-load operation or light load operation, the current amplitude value of the DC current iDC is smaller than that during normal operation. For that reason, by determining the AC circulation current amplitude value based on the current amplitude value of the DC current iDC, the AC circulation current can be included in the inter-parallel arms circulation current during no-load operation or light load operation, and the AC circulation current can be prevented from being included in the inter-parallel arms circulation current during normal operation. As a result, even during no-load operation or light load operation, a sufficient charge and discharge current can be flown through the DC capacitor, and voltage balance of the DC capacitor can be maintained by balance control. During normal operation, it is possible to prevent the circulation current that does not contribute to power conversion from flowing excessively while maintaining a charge and discharge current sufficient for balance control, and to reduce circuit loss.

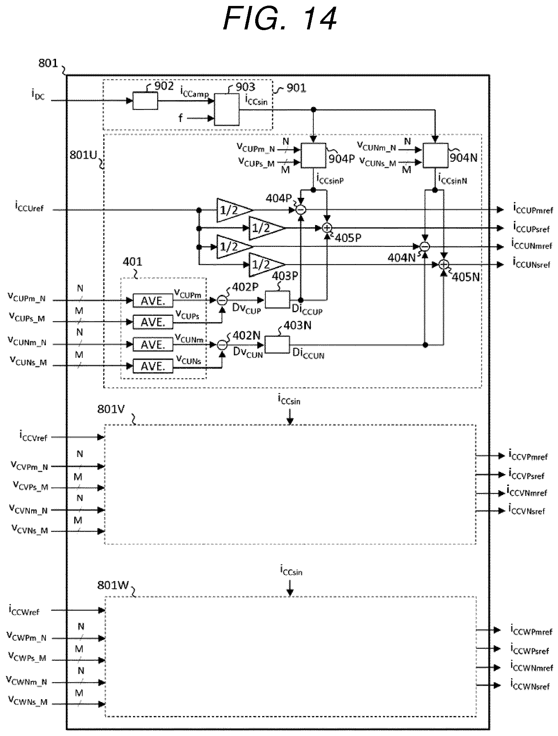

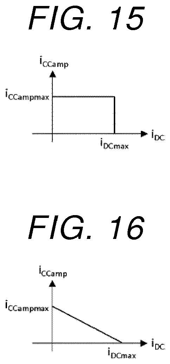

FIG. 14 is a block diagram illustrating a configuration of the inter-parallel arms balance control unit of FIG. 13, FIG. 15 is a diagram illustrating an example of an amplitude of the AC circulation current determined by the AC circulation current amplitude determination unit of FIG. 14, and FIG. 16 is a diagram illustrating another example of the amplitude of the AC circulation current determined by the AC circulation current amplitude determination unit of FIG. 14.

In FIG. 14, the inter-parallel arms balance control unit 801 includes intra-phase, inter-parallel arms balance control units 801U, 801V, and 801W for each phase of the U-phase, V-phase, and W-phase. The intra-phase, inter-parallel arms balance control units 801U, 801V, and 801W control the inter-parallel arms circulation currents iCCxym and iCCxys so as to eliminate unbalance of the DC capacitor voltage of the parallel arm based on the load during operation of the power conversion device, for each of the U-phase, the V-phase, and the W-phase. In the intra-phase, inter-parallel arms balance control unit 801U, an AC circulation current generation unit 901 and current output determination units 904P and 904N are added to the intra-phase, inter-parallel arms balance control unit 306U of FIG. 7. An AC circulation current generation unit 901 includes an AC circulation current amplitude determination unit 902 and an AC current generation unit 903.

The AC circulation current amplitude determination unit 902 determines an AC circulation current amplitude value iCCamp according to the DC current iDC and outputs the AC circulation current amplitude value iCCamp to the AC current generation unit 903. The AC circulation current amplitude determination unit 902 may output a constant maximum amplitude value iCCampmax as the AC circulation current amplitude value iCCamp until the DC current iDC reaches the maximum value iDCmax, as illustrated in FIG. 15. Alternatively, the AC circulation current amplitude determination unit 902 may decrease the AC circulation current amplitude value iCCamp as the DC current iDC increases, as illustrated in FIG. 16.

The AC current generation unit 903 generates an AC circulation current iCCsin having the AC circulation current amplitude value iCCamp and a frequency f, and outputs the AC circulation current iCCsin to the current output determination units 904P and 904N. The frequency f can be set arbitrarily other than zero (other than DC).

The current output determination unit 904P determines whether or not to output the AC circulation current iCCsin output from the AC circulation current generation unit 901 according to the capacitor voltage of the parallel arm on the P-side in the U-phase, and outputs an AC circulation current iCCsinP to the subtractor 404P and the adder 405P according to the determination result. The AC circulation current iCCsinP is set to the AC circulation current iCCsin when the deviation between the maximum value and the minimum value of the capacitor voltage of parallel arm on P-side in the U-phase parallel arm exceeds a certain value, and is set to zero when the deviation between the maximum value and the minimum value of the capacitor voltage of the parallel arm on the P-side in the U-phase is equal to or less than the certain value.

The subtractor 404P generate a circulation current command value iCCUPmref by subtracting the circulation current correction value DiCCUP and the AC circulation current iCCsinP from one-half of the U-phase circulation current command value iCCUref and inputs circulation current command value iCCUPmref to the circulation current control unit 307. The adder 405P generates a circulation current command value iCCUPsref by adding the circulation current correction value DiCCUP and AC circulation current iCCsinP to one-half of the U-phase circulation current command value iCCUref and inputs the circulation current command value iCCUPsref to circulation current control unit 307.

The current output determination unit 904N determines whether or not to output the AC circulation current iCCsin output from the AC circulation current generation unit 901 according to the capacitor voltage of the parallel arm on the N-side in the U-phase, and inputs the AC circulation current iCCsinN to the subtractor 404N and adder 405N according to the determination result. The AC circulation current iCCsinN is set to the AC circulation current iCCsin when the deviation between the maximum value and the minimum value of the capacitor voltage of the parallel arm on the N-side in the U-phase exceeds a certain value, and is set to zero when the deviation between the maximum value and the minimum value of the capacitor voltage of the parallel arm on the N-side in the U-phase is equal to or less than the certain value.

The subtractor 404N generates a circulation current command value iCCUNmref by subtracting the circulation current correction value DiCCUN and AC circulation current iCCsinN from one-half of the U-phase circulation current command value iCCUref and inputs the circulation current command value iCCUNmref to the circulation current control unit 307. The adder 405N generates a circulation current command value iCCUNsref by adding the circulation current correction value DiCCUN and AC circulation current iCCsinN to one-half of the U-phase circulation current command value iCCUref and inputs the circulation current command value iCCUNsref to circulation current control unit 307.

With this configuration, even during no-load operation or light load operation, the inter-parallel arms circulation current can flow and DC capacitor voltage unbalance can be eliminated. It is possible to prevent the AC circulation current iCCsin from flowing through the arm having a small capacitor voltage unbalance, and it is possible to reduce circuit loss due to flowing of the AC circulation current iCCsin.

Further, as illustrated in FIG. 9A, based on the DC component of the circulation current correction value DiCCUP input to the subtractor 404P and the adder 405P, the inter-parallel arms circulation currents iCCUPm and iCCUPs are controlled so that unbalance of the DC capacitor voltage of the parallel arm is eliminated. In this case, even when the AC circulation current iCCsin having the frequency f is input to the subtractor 404P and the adder 405P, since the DC component of the AC circulation current iCCsin becomes 0 every cycle, it is possible to prevent control of the inter-parallel arms circulation currents iCCUPm and iCCUPs from being affected by the circulation current correction value DiCCUP.

In addition, since the intra-phase, inter-parallel arms balance control units 801V and 801W have the same configuration as that of the intra-phase, inter-parallel arms balance control unit 801U, the description thereof is omitted.

**Claims**

1. A power conversion device comprising:

   a first arm in which unit converters including energy buffers are connected in N stages (N is a positive integer) and a first reactor is connected in series to the unit converters connected in N stages and which is provided in each phase of alternating current;
   a second arm in which unit converters including energy buffers are connected in M stages (M is a positive integer) and a second reactor is connected in series to the unit converters connected in M stages and which is connected in parallel to the first arm; and
   a control unit that controls an inter-parallel arms circulation current circulating between the first arm and the second arm in the same phase.

2. The power conversion device of claim 1, further comprising:

   a first current detector connected in series to the first reactor; and
   a second current detector connected in series to the second reactor.

3. The power conversion device of claim 1, further comprising:

a first current detector connected in series to the first reactor or the second reactor; and
a second current detector connected in series to a parallel circuit of the first arm and the second arm.

4. The power conversion device of claim 3, wherein detection accuracy of the first current detector is lower than detection accuracy of the second current detector.

5. The power conversion device of claim 3, wherein the first current detector detects a difference current between a first arm current flowing through the first arm and a second arm current flowing through the second arm.

6. The power conversion device of claim 1, wherein the control unit controls the inter-parallel arms circulation current based on a first arm current flowing through the first arm and a second arm current flowing through the second arm.

7. The power conversion device of claim 1, wherein the control unit controls the inter-parallel arms circulation current in a direction in which a deviation between a circulation current command value and the inter-parallel arms circulation current for each of the first arm and the second arm decreases.

8. The power conversion device of claim 7, wherein the unit converter includes a DC capacitor as the energy buffer, and the control unit computes an arm average voltage value which is an average value of DC capacitors for each of the first arm and the second arm, and controls the inter-parallel arms circulation current in a direction in which a deviation between the arm average voltage value of the first arm and the arm average voltage value of the second arm decreases.

9. The power conversion device of claim 8, wherein the control unit computes a moving average value of the arm average voltage value, and decreases an AC voltage fluctuation amount included in the arm average voltage value.

10. The power conversion device of claim 8, wherein, when the circulation current command value of the first arm is calculated by adding a circulation current correction value calculated based on the deviation of the arm average voltage value of the first arm and the arm average voltage value of the second arm, the control unit calculates the circulation current command value of the second arm by subtracting the circulation current correction value, and when the circulation current command value of the first arm is calculated by subtracting the circulation current correction value, the control unit calculates the circulation current command value of the second arm by adding the circulation current correction value.

11. The power conversion device of claim 1, wherein the control unit includes an arm current component separation unit that separates an AC current, a DC current, and the inter-parallel arms circulation current included in an arm current flowing through the first arm and the second arm,
an inter-phases balance control unit that causes a phase average voltage value of a DC capacitor voltage for each unit converter of each phase to follow a DC capacitor voltage average value of all the unit converters,
an inter-parallel arms balance control unit that computes an arm average voltage value which is an average value of DC capacitors for each of the first arm and the second arm and controls the inter-parallel arms circulation current in a direction in which a deviation between the arm average voltage value of the first arm and the arm average voltage value of the second arm decreases,
a circulation current control unit that controls the inter-parallel arms circulation current in a direction in which a deviation between a circulation current command value and the inter-parallel arms circulation current for each of the first arm and the second arm decreases,
an AC current control unit that causes the AC current to follow an AC current command value,
a DC current control unit that causes the DC current to follow a DC current command value, and
a gate pulse generation unit that generates a gate pulse to be input to the unit converter, based on a circulation voltage command value output from the circulation current control unit, an AC voltage command value output from the AC current control unit, and a DC voltage command value output from the DC current control unit.

12. The power conversion device of claim 1, wherein the control unit causes the inter-parallel arms circulation current to include an AC circulation current having an arbitrary frequency.

13. The power conversion device of claim 12, wherein the control unit determines a current amplitude value of the AC circulation current based on a current amplitude value of the DC current flowing through the power conversion device.

14. The power conversion device of claim 12, wherein the control unit performs control not to output the AC circulation current when a voltage deviation between a maximum voltage and a minimum voltage of DC capacitors of the first arm and the second arm is a predetermined value or less.

15. A control method of a power conversion device including a first arm in which unit converters including energy buffers are connected in N stages (N is a positive integer) and a first reactor is connected in series to the unit converters connected in N stages and which is provided in each phase of alternating current and a second arm in which unit converters including energy buffers are connected in M stages (M is a positive integer) and a second reactor is connected in series to the unit converters connected in M stages and which is connected in parallel to the first arm, the method comprising:
controlling an inter-parallel arms circulation current that circulates between the first arm and the second arm in the same phase.

# FIG. 1

# FIG. 2

## FIG. 3

## FIG. 4

## FIG. 5

## FIG. 6

# FIG. 7

# FIG. 8

## FIG. 9A

## FIG. 9B

## FIG. 10

FIG. 11

23

# FIG. 12

# FIG. 13

# FIG. 14

# FIG. 15

# FIG. 16

Europäisches
Patentamt

European
Patent Office

Office européen
des brevets

# EUROPEAN SEARCH REPORT

**Application Number**

EP 19 21 1807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 766 972 A1 (ABB TECHNOLOGY AG [CH]) 20 August 2014 (2014-08-20)<br>* figures 1-4 *<br>* paragraphs [0018], [0031] - [0036], [0042] - [0045] * | 1-15 | INV.<br>H02M7/493<br>H02M7/483 |
| X | US 2017/187276 A1 (TOWNSEND CHRISTOPHER [AU] ET AL) 29 June 2017 (2017-06-29)<br>* figures 1,2,3,6 *<br>* paragraphs [0014], [0056], [0071], [0076] * | 1-15 | |

|  |  |
|---|---|
| | **TECHNICAL FIELDS SEARCHED (IPC)** |
| | H02M |

The present search report has been drawn up for all claims

| Place of search | Date of completion of the search | Examiner |
|---|---|---|
| The Hague | 16 April 2020 | Kail, Maximilian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 21 1807

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2020

| Patent document cited in search report | | Publication date | Patent family member(s) | Publication date |
|---|---|---|---|---|
| EP 2766972 | A1 | 20-08-2014 | AU 2011379032 A1 | 01-05-2014 |
| | | | BR 112014008501 A2 | 13-06-2017 |
| | | | CA 2852140 A1 | 18-04-2013 |
| | | | CN 103875147 A | 18-06-2014 |
| | | | EP 2766972 A1 | 20-08-2014 |
| | | | US 2014218986 A1 | 07-08-2014 |
| | | | WO 2013053399 A1 | 18-04-2013 |
| US 2017187276 | A1 | 29-06-2017 | CN 106105007 A | 09-11-2016 |
| | | | EP 3103187 A1 | 14-12-2016 |
| | | | US 2017187276 A1 | 29-06-2017 |
| | | | WO 2015113642 A1 | 06-08-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010512136 T
- JP 2003189629 A
- JP 2014230307 A